# EUROPEAN PATENT SPECIFICATION

(11) **EP 1 993 373 B1**
(45) Date of publication and mention of the grant of the patent: **05.06.2013**
(21) Application number: 07705165.4
(22) Date of filing: 07.02.2007
(51) Int. Cl.: A23G 9/28, A23G 9/04, A23G 9/22, F25C 1/14

(54) **ICE SLURRY MACHINE**
BREIEISMASCHINE
MACHINE A COULIS DE GLACE

(30) Priority: 07.02.2006 GB 0602389; 21.11.2006 GB 0623142
(43) Date of publication of application: 26.11.2008
(73) Proprietor: IMI Vision Limited, Brighouse West Yorkshire HO6 4LX (GB)
(72) Inventor: GOULET, Douglas, P., Hanover, MN 55341 (US); HOLEC, Henry, Victor, Mendota Heights, MN 55118 (US); FINK, Ulrich, Maple Grove, MN 55369 (US); CZECK, Stephen, J., Shoreview, MN 55126 (US); DISCHINGER, Thomas, L., Anoka, MN 55303 (US); SCHAUMANN, Jonathan, Lee, Champlin, MN 55316 (US)
(74) Representative: Wightman, David Alexander
(86) International application number: PCT/GB2007/000434
(87) International publication number: WO 2007/091067

(56) References cited:
- GB-A- 1 132 539
- US-A- 3 372 558
- US-A- 3 608 779
- US-A1- 2002 033 021

## Description

The present invention relates to a device for producing slurry ice for use as a refrigerant and in particular, but not exclusively, to a device for producing slurry ice for cooling a bar top beverage delivery system.

Ice slurries, a mixture of fine ice particles suspended in a liquid, are known for use in many applications. One common field of use is as a replacement for standard coolants in coolant fluid circuits where it has the advantage of the ice being a thermal store of energy which is released as the ice melts.

Traditionally the ice slurry has been formed using a scraped surface heat exchanger i.e. a refrigerated surface from which ice crystals are dislodged by a rotating blade in constant contact with the surface. Such scraped surface near escchanges are known from US-A-3608779, US-A-2002/033021 and US-A-3372558.

There are a number of problems associated with such devices, as will be discussed below.

Firstly, a powerful motor is needed to rotate the scraper. As the ice forms on the cooled surface, it is mechanically dislodged by the scraper which is often resiliently biased towards the refrigerated surface so as to maintain contact therewith. As a result substantial motor torque is required to overcome the friction generated between the scraper and the refrigerated surface in addition to that generated between the scraper and the ice.

Secondly, wear can be exhibited on the surface of the heat exchanger as it is scraped by the blades. This is compounded by the fact that ice crystals are often pushed around in front of the scraper, unable to pass between the scraper and the cooled surface. These crystals have a tendency to agglomerate and wear the cooling surface yet further, potentially eroding the surface resulting in the eroded material becoming entrained into the ice slurry.

Another common problem in one design arrangement, where the cooled surface is a projection into the interior of a barrel rather than *on* the interior surface of the barrel, is that, as the fluid in the centre of the device rotates with virtually no relative movement between crystals, the crystals tend to agglomerate in this area resulting, in time, in a large lump of solid ice forming in the device (known as freeze up) which significantly impairs machine performance. Furthermore, the device must then be defrosted before operation can continue.

Lastly, the cooling capacity of the fluid is characterised in terms of ice fraction, that is the percentage of the fluid by volume which is in the solid state. Broadly speaking the lower the ice fraction, the more liquid is the fluid, and vice versa. In known devices, the percentage ice fraction in the fluid is inferred by measuring the motor torque as follows. The motor torque has three component parts:
1. The torque generated by fluid resistance, that is to say the interaction of the blade with the fluid that is required to keep the fluid moving (the fluid torque).
2. The torque generated by the friction between the scraper and the refrigerated surface (the scraping torque).
3. The torque generated by the harvesting of the ice from the refrigerated surface (the harvesting torque).

Broadly speaking, the scraping torque remains constant once known machines are up and running. However, the harvesting torque varies dependant on the cooling load delivered by the refrigerated surface. In other words, the greater the cooling capacity of the surface, the greater the volume of ice generated over a given time, and consequently the greater the torque transmitted by the scraper to the motor. Additionally, the fluid torque increases as more ice is harvested causing the fluid to become more viscous as the ice fraction increases.

Accordingly, in order to control the ice fraction of the fluid, the motor torque is monitored in order to infer the viscosity of the fluid from the change in torque from a base level which relates to a steady state condition. However, the change in motor torque that results from an increase in fluid viscosity can be relatively small compared to the presiding scraping torque and harvesting torque. This means that complex electronics are required to isolate the signal that relates to the change in torque attributable to a change in fluid viscosity. This adds cost and complexity to the machine. Furthermore, the accuracy of inference of ice fraction from motor torque is limited and this can result in the poor accuracy of control of ice fraction which in turn can deliver a refrigerant with varied cooling capacity.

It is the purpose of the present invention to mitigate at least some of the above problems.

According to a first aspect of the invention there is provided a device for producing an ice slurry for use as a refrigerant as defined in claim 1.

Preferably, the vortex is generated by rotating an impeller or blade mounted within the freeze chamber.

Preferably, the freeze chamber includes a free-rotating cage which acts to disrupt the boundary layer in the refrigerant solution at the wall so as to maximise the shearing of the frozen particles.

According to a second aspect of the invention there is provided a method of producing an ice slurry for use as a refrigerant as defined in claim 9.

This method and device provides the advantage of eliminating the requirement to defrost the freeze chamber since the vortex prevents the build up of a volume of ice within the freeze chamber. Other advantages of the invention will become evident in the leading of the description of an embodiment of the invention.

According to a third aspect of the invention there is provided a method of controlling a device for producing a refrigerant as defined in claim 14.

This method has the advantage that the relative speed between the vortex inducing means and the cage is a function of fluid viscosity and harvesting friction only. Furthermore, when the heat exchanger is switched off, there is no ice harvesting friction and so the relative speed is a direct indication of fluid viscosity. This greatly simplifies the control circuit required since the relative speed signal is proportional to the ice fraction and requires very little further signal processing. This contrasts with the complex signal processing required to deduce ice fraction from the motor torque signal of know devices.

The invention will now be described by way of example only and with reference to the following drawings, in which:
Figure 1 is a perspective view of an ice slurry machine according to the present invention;
Figure 2 is an exploded perspective view of a barrel assembly of the machine of Figure 1,
Figure 3 is an enlarged perspective view of a barrel and heat exchanger of the barrel subassembly of Figure 2,
Figures 4A and 4B are side and end elevation respectively of the free-rotating cage of the machine of Figure 1, and
Figure 5 is a perspective view of the cage of the machine of Figure 1 and an alternative embodiment of displacement means according to the present invention.

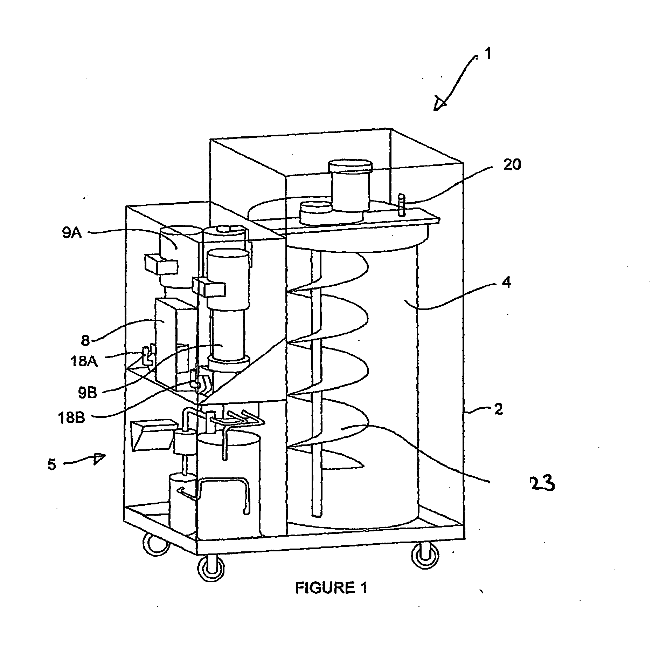

In Figure 1 an ice slurry machine 1 has a machine frame 2 (shown in dashed lines) on which is mounted a bulk storage reservoir 4, a refrigeration unit indicated generally at 5, a product barrel assembly 8 and first and second product pumps 9A, 9B. The product pumps 9A, 9B are provided to take ice slurry from the bulk storage reservoir for delivery to the required location.

The machine might typically be arranged in a backroom of a bar. The ice slurry is delivered to a coolant line for cooling a beer ring main in the place of a traditional refrigerant.

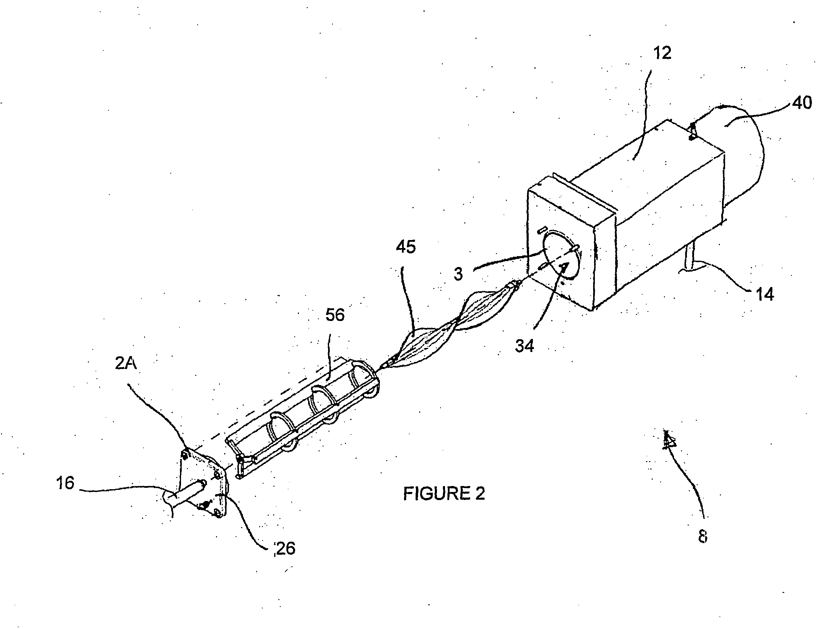

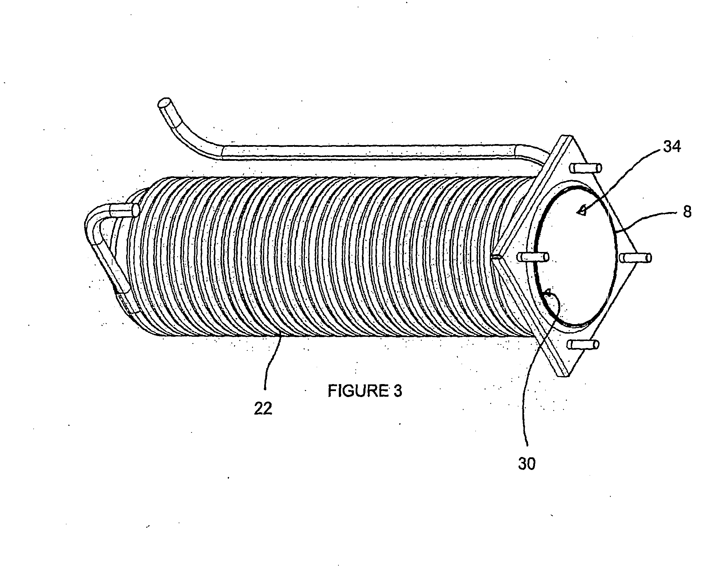

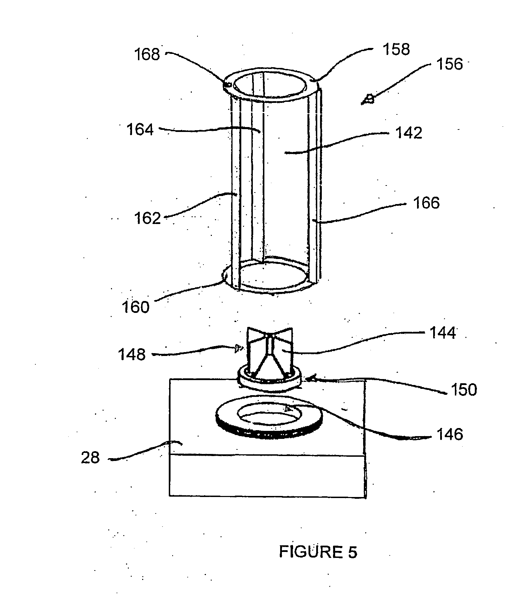

In Figure 2 the product barrel assembly 8 is shown in further detail to include a product barrel 3 which defines a cylindrical freeze chamber 34 which is bounded at its lower end by an outlet plate 26 and at its upper end by an end plate 28 which is shown in Figure 5 only. Referring briefly to Figure 3, the barrel 3 defines a cylindrical freeze chamber wall 30 on its inner surface and carries a heat exchanger 22 for removing heat from the refrigerant solution at its outer surface. The heat exchanger is a helical copper cooling coil which is soldered to the barrel but it will be appreciated that other known heat exchanger designs may be employed within the scope of the invention.

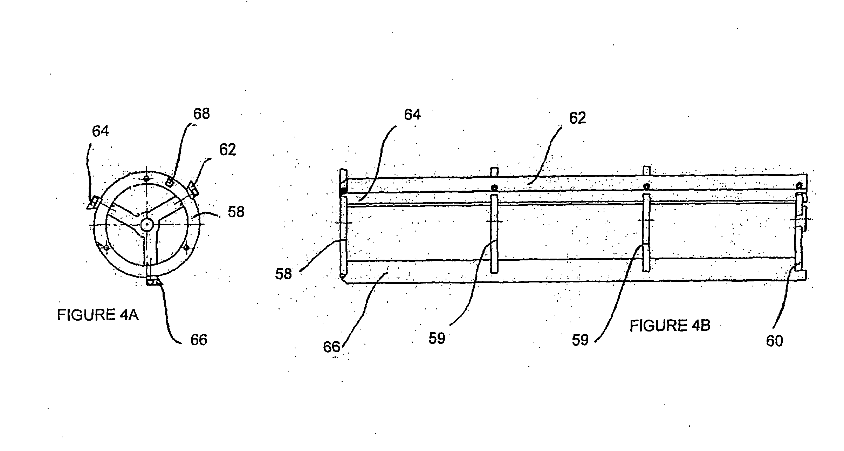

Referring once again to Figure 2, the freeze chamber 34 has arranged within it a free-rotating cage 56 which will be referred to in further detail shortly with respect to Figures 4A and 4B.

The barrel assembly 8 further includes a power drive in the form of an electric motor 40 which is mounted on the end plate 28. The electric motor 40 drives a displacement means in the form of an auger 45 which is arranged within the freeze chamber 34. It will be appreciated that the electric motor could be replaced by a hydraulic motor or other known form of rotary power drive without departing from the scope of the invention.

The auger 45 is in the form of a helix in order to promote axial movement along the freeze chamber 34. This minimises the risk of the fluid stagnating and forming an ice ball which then spreads rapidly through the fluid.

Turning now to the cage 56 and its interaction with the auger 45, the cage 56 is able to rotate freely within the freeze chamber 34, that is to say it is can rotate relative to both the freeze chamber wall 30 and the auger 45. The cage 56 is shown in greater detail in Figure 4 to include an upper 58, lower 60, and intermediate 59 circular support frames and a set of blades 62, 64, 66 extending there between. The blades 62, 64, 66 are substantially triangular in shape and protrude from the support frames 58, 59, 60 towards the freeze chamber wall 30. The swept diameter of the outer edge of the blades 62, 64, 66 is less than the diameter of the freeze chamber wall 30.

In use, a glycol-water mix or alternative appropriate solution is supplied into the barrel 8 via an inlet 14. A controller (not shown) controls the heat exchanger to begin cooling the refrigerant solution in the freeze chamber 34. The controller also operates the electric motor 40 to drive the auger 45 which causes the fluid in the freeze chamber 34 to form a vortex in the form of a rotating column. Thermal heat transfer from the cooling coil reduces the temperature of the freeze chamber walls and the fluid therein. As the temperature of the fluid drops, ice crystals start to nucleate on the freeze chamber walls. As they do so the water freezes out of the solution resulting in a local increase in the concentration of the solute (in this case the glycol), thereby suppressing the freezing point of the fluid between the ice crystals since the glycol acts as a freezing point suppressant in the solution. This inhibits the sideways (i.e. along the circumference of the wall) growth of the ice crystals and as a result long thin ice crystals grow from the freeze chamber walls towards the centre of the chamber. It is currently understood that as they do so friction between the rotating column of fluid and the ice crystals imparts a shear force on the crystals which are relatively fragile due to their long thin (dentricular) form. The shear forces break off the ice crystals and they become entrained into the fluid. As the process continues more ice will become entrained into the fluid thereby creating an ice slurry.

As the ice fraction of the fluid in the freeze chamber increases so does the viscosity of the fluid. This results in a boundary layer forming on the edge of the freeze chamber in which the rotational velocity is greatly reduced. This results in a vastly reduced shear force on the ice crystals growing on the freeze chamber walls. The effect of this is that above a certain ice fraction no further ice is entrained into the fluid effecting a maximum practical ice fraction. This value will be dependant on the nature and quantity of freezing point suppression (in this case glycol) within the fluid.

The cage 56 is provided to disrupt this boundary layer. In use the rotational movement of the fluid within the freeze chamber 34 causes the cage 56 to rotate. This in turn accelerates the fluid in the boundary area thereby counterbalancing the reduction in velocity at the chamber walls and associated drop in shear force.

It will be appreciated that the blades have an angled leading edge in order to promote movement of the fluid ahead of the cage, thereby assisting the mixing of ice particles within the fluid in order to promote a more homogeneous slurry. There is a clearance between the blades 62, 64, 66 and the freeze chamber wall 30 such that there is little or no wear or mechanical friction between these two parts. The clearance is up to 1mm (one millimetre) and preferably in the region of 0.25mm (millimetres). The clearance is relatively small such that if any crystals growing on the freeze chamber wall 30 does not fracture under the shear force and become entrained into the fluid, once it grows beyond a certain size it is physically fractured by the blades 62, 64, 66.

The cage also serves a second purpose. A magnet 68 is attached to the upper support frame 58 and an inductive sensor (not shown for clarity) is located adjacent the magnet on the end plate. As the cage 56 rotates the magnet 68 passes the sensor and creates a signal. The controller (not shown) uses this data to calculate the speed of rotation of the cage 56. Concurrently the controller monitors the speed of rotation of the auger 45 by way of the speed of the motor. The magnitude of the relative speed between the auger 45 and the cage 56 is indicative of the viscosity of the fluid in which the cage is rotating. Since the viscosity of the fluid is largely dictated by its ice fraction, the relative speed of the auger 45 and the cage 56 is monitored in order to maintain the fluid at a desired ice fraction as follows. The ice fraction is dependant on the volume of ice within the fluid. This in turn is dependant on the volume of ice being harvested. However the formation of ice on the refrigerated surface is dependant on the extent of cooling. Therefore, whilst the motor is continually operated in order to promote the homogeneity of the fluid, the controller only switches on the cooling to cool the freeze chamber when the relative speed between the auger 45 and the cage 56 drops below a predetermined level. Conversely, the controller switches off the cooling when the relative speed between the auger 45 and the cage 56 rises above a predetermined level.

Accordingly, the design of the auger 45 and the cage 56 deliver the following advantages. Firstly, freeze up is prevented by virtue of the constant displacement of the fluid by the auger 45. Secondly, the ice fraction is monitored accurately and simply by the fluid coupling between the auger 45 and the cage 56.

Once refrigerant has been produced in the barrel it is delivered into the bulk storage reservoir 4 via a barrel outlet 16. In this way, a volume of refrigerant builds up in the reservoir 4. An ice slurry sensor (not shown) may be provided in the barrel outlet 16 to measure the ice fraction of the refrigerant being produced and the signal produced used for closed loop feedback to the control circuit. The reservoir 4 is provided with a stirrer 23 which rotates in order to prevent the ice from separating from the solution. In this way, a homogeneous ice slurry is maintained in the reservoir. The pumps 9A, 9B then pump the refrigerant from the reservoir into a refrigerant line (not shown for clarity) via pump outlets 18A, 18B (shown in Figure 1) to deliver the refrigerant to the required location. Under the continual pumping of the pumps 9A, 9B, the refrigerant returns to the machine from the required location, for example a beer ring main, via product inlet 14. (see Figure 2).

The refrigerant may be employed in a beverage dispense system for cooling a beverage in a beverage line delivering product from a bulk storage to a dispense location. In this arrangement, the refrigerant line from the reservoir is arranged so that beverage in the beverage line is cooled by heat exchange with the refrigerant in the refrigerant line, and a return line is arranged to return refrigerant from the dispense location to the freeze chamber. The refrigerant line and beverage line may extend along a parallel path. For example, the refrigerant line might be a beer ring main of known design. In this application the refrigerant surrounds one or more beer lines in order to ensure that the beer remains cool on its way from the keg to the bar.

Figure 5 shows an impeller 144 which provides an alternative form of displacement means to the auger of the first embodiment. Whilst this is provided as an alternative to the auger 45, it will be appreciated that whilst the auger 45 presents improved fluid displacement qualities either design could be implemented effectively in any embodiment of barrel subassembly.

The impeller 144 is shown having a fluid driving portion 148 and a bearing portion 150. The bearing portion 150 sits in a recess 146 of the base 126 such that the impeller 144 can rotate relative to the base 126 under the action of the electric motor 140. The purpose of the impeller 144 is to generate in the fluid a vortex, which is embodied as a rotating column of fluid. The impeller 144 also acts to disrupt the fluid thereby improving the homogeneity of the fluid.

## Claims

1. A device for producing an ice slurry for use as a refrigerant, comprising:
a freeze chamber (34) for receiving a refrigerant solution, the freeze chamber (34) being defined in part by a generally curved internal circumferential wall (30),
the circumferential wall (30) including means (22) for generating heat exchange through the wall (30) such that in use liquid freezes out of the refrigerant solution to form frozen particles on the wall (30),
**characterised by** means (45, 144) for in use inducing within the fluid a vortex operative to shear the frozen particles from the wall (30) and entrain the particles in the refrigerant solution thereby creating in use an ice slurry having an ice fraction such that the ice slurry is suitable for use as a refrigerant.

2. The device according to claim 1 wherein the device includes a bulk storage reservoir (4) for in use receiving the ice slurry from the freeze chamber (34) and the reservoir (4) preferably includes a stirrer (23) to mix the refrigerant.

3. The device according to any one of claims 1 to 3 wherein in use the vortex is generated b rotating an impeller (144) or an auger (45) mounted for rotation within the freeze chamber (34).

4. The device according to any one of claims 1 to 3 wherein the freeze chamber (34) includes a free-rotating cage (56, 156) which acts in use to disrupt the boundary layer between the wall (30) and the refrigerant solution so as to maximise the shearing of the frozen particles.

5. The device according to any preceding claim wherein the device includes a pump (9A, 9B) for pumping the ice slurry from the reservoir to a cooling location.

6. The device according to claim 4 including a sensor for monitoring the rotational speed of the free-rotating cage (56, 156).

7. The device according to claim 6, the device including a controller for operating the means (22) for generating heat exchange when the relative speed of rotation between the means (45, 144) for inducing the vortex and the free-rotating cage (56, 156) is below a predetermined value.

8. The device according to any preceding claim wherein the machine includes an ice fraction sensor.

9. A method of producing an ice slurry for use as a refrigerant comprising the steps of:
introducing a refrigerant solution into a freeze chamber (34) which is defined in part by a generally curved internal circumferential wall (30);
cooling the refrigerant solution by means of heat exchange through said wall (30) such that liquid freezes out of the solution to form frozen particles on the wall (30);
**characterised by** generating within the refrigerant solution a vortex operative to shear the frozen particles from the wall (30) and entrain the particles in the refrigerant solution thereby creating an ice slurry in the solution, the ice slurry having an ice fraction such that the ice slurry is suitable for use as a refrigerant.

10. The method according to claim 9 including the step of controlling the rate of heat exchange through the wall (30) so as to achieve a predetermined ice fraction in the ice slurry, for example controlling the rate of heat exchange using an on/off control.

11. The method according to claim 10 including the further step of delivering a volume of ice slurry from the freeze chamber (34) into a bulk storage reservoir (4) prior to pumping the refrigerant from the reservoir (4) to a cooling location and/or the step of recirculating the refrigerant solution between the reservoir (4) and the freezing chamber (34).

12. The method according to any one of claims 9 to 11 wherein the vortex is generated by rotating an impeller (144) or auger (45) mounted for rotation within the freeze chamber (34).

13. The method according to any one of claims 9 to 12 wherein the freeze chamber (34) includes a free-rotating cage (56, 156) which acts to disrupt the boundary layer in the refrigerant solution at the wall (30).

14. A method of controlling a device for producing an ice slurry for use as a refrigerant, the device comprising:
a freeze chamber (34) for receiving a refrigerant solution, the freeze chamber (34) being defined in part by a generally curved internal circumferential wall (30),
the circumferential wall (30) including means (22) for generating heat exchange through the wall (30) such that in use liquid freezes out of the refrigerant solution to form frozen particles on the wall, **characterised by**
means (45, 144) in use, inducing within the fluid a vortex operative to shear the frozen particles from the wall (30) and entrain the particles in the refrigerant solution thereby creating, in use, an ice slurry in the solution having a predetermined ice fraction suitable for use as a refrigerant,
the freeze chamber (34) including a free-rotating cage (56, 156),
the method including the steps of rotating the means (45, 144) for inducing the vortex at a predetermined speed,
monitoring the speed of the free-rotating cage (56, 156),
operating the means (22) for generating heat exchange when the relative speed of rotation between the means (45, 144) for inducing the vortex and the free-rotating cage (56, 156) is below a predetermined value.

15. A system for cooling beverages including the device of any one of claims 1 to 8, and further including,
a beverage line for delivering product from bulk storage to a dispense location,
a coolant line for carrying refrigerant from the device along a path so as to cool the beverage line,
a return line to return coolant from the coolant line to the device.

## Patentansprüche

1. Eine Vorrichtung zur Herstellung von Breieis für die Verwendung als Kühlmittel, bestehend aus:
einer Tiefkühlkammer (34), um eine Kühlmittellösung aufzunehmen, wobei die Tiefkühlkammer (34) zum Teil durch eine im Allgemeinen gekrümmte, umlaufende Innenwand (30) definiert wird,
wobei die umlaufende Wand (30) eine Einrichtung (22) zur Erzeugung eines Wärmeaustausches durch die Wand (30) beinhaltet, sodass während des Betriebes Flüssigkeit aus der Kühlmittellösung heraus friert, um gefrorene Partikel an der Wand (30) zu bilden,
**gekennzeichnet durch** eine Einrichtung (45, 144) zur Bildung eines Wirbels innerhalb der Flüssigkeit während des Betriebes, wobei der Wirbel imstande ist, die gefrorenen Partikel von der Wand (30) abzuschneiden und die Partikel in der Kühlmittellösung mitzunehmen, wodurch während des Betriebes ein Breieis erzeugt wird, das einen für die Anwendung als Kühlmittel geeigneten Eisanteil aufweist.

2. Die Vorrichtung gemäß Anspruch 1, worin die Vorrichtung einen Großbehälter (4) beinhaltet, um während des Betriebes das Breieis von der Tiefkühlkammer (34) aufzunehmen, und der Großbehälter (4) vorzugsweise ein Rührwerk (23) enthält, um das Kühlmittel zu vermischen.

3. Die Vorrichtung gemäß einem der Ansprüche 1 bis 3, worin der Wirbel während des Betriebes durch Rotation eines Laufrads (144) oder einer Einzugsschnecke (45), die zur Rotation innerhalb der Tiefkühlkammer (34) montiert wurden, erzeugt wird.

4. Die Vorrichtung gemäß einem der Ansprüche 1 bis 3, worin die Tiefkühlkammer (34) einen frei rotierenden Käfig (56, 156) umfasst, der während des Betriebes die Funktion hat, die Grenzschicht zwischen der Wand (30) und der Kühlmittellösung zu unterbrechen, um das Abschneiden der gefrorenen Partikel zu maximieren.

5. Die Vorrichtung gemäß einem vorhergehenden Anspruch, worin die Vorrichtung eine Pumpe (9A, 9B) beinhaltet, welche das Breieis vom Speicher zu einer Kühlstelle pumpt.

6. Die Vorrichtung gemäß Anspruch 4, die einen Sensor zur Überwachung der Drehgeschwindigkeit des frei rotierenden Käfigs (56, 156) beinhaltet.

7. Die Vorrichtung gemäß Anspruch 6, wobei die Vorrichtung eine Steuerung zum Betrieb der Einrichtung (22) zur Erzeugung eines Wärmeaustausches beinhaltet, wenn die relative Geschwindigkeit der Rotation zwischen der Einrichtung (45, 144) zur Auslösung des Wirbels und dem frei rotierenden Käfig (56, 156) unter einem vorher festgelegten Wert liegt.

8. Die Vorrichtung gemäß einem vorhergehenden Anspruch, worin das Gerät einen Eisanteilsensor beinhaltet.

9. Ein Verfahren zur Herstellung von Breieis für die Verwendung als Kühlmittel, das folgende Schritte umfasst:
Einführung einer Kühlmittellösung in eine Tiefkühlkammer (34), die zum Teil durch eine im Allgemeinen gekrümmte, umlaufende Innenwand (30) definiert wird;
Abkühlen der Kühlmittellösung mittels Wärmeaustausch durch die Wand (30), sodass die Flüssigkeit aus der Lösung heraus gefriert, um gefrorene Partikel auf der Wand (30) zu bilden,
**gekennzeichnet durch** die Bildung eines Wirbels innerhalb der Kühlmittellösung, wobei der Wirbel imstande ist, die gefrorenen Partikel von der Wand (30) abzuschneiden und die Partikel in der Kühlmittellösung mitzunehmen, wodurch ein Breieis in der Lösung erzeugt wird, das einen für die Anwendung als Kühlmittel geeigneten Eisanteil aufweist.

10. Das Verfahren gemäß Anspruch 9, das den Schritt der Steuerung der Wärmeaustauschrate durch die Wand (30) umfasst, um einen vorher festgelegten Eisanteil im Breieis zu erreichen, wie zum Beispiel Steuerung der Wärmeaustauschrate mithilfe einer Ein-/Aus-Regelung.

11. Das Verfahren gemäß Anspruch 10, das den weiteren Schritt der Lieferung einer Breieismenge von der Tiefkühlkammer (34) zu einem Massenspeicher (4) beinhaltet, bevor das Kühlmittel vom Speicher (4) zu einer Kühlstelle gepumpt wird und/oder den Schritt des Dauerumlaufs der Kühlmittellösung zwischen dem Speicher (4) und der Tiefkühlkammer (34) umfasst.

12. Das Verfahren gemäß einem der Ansprüche 9 bis 11, worin der Wirbel durch Rotation eines Laufrads (144) oder einer Einzugsschnecke (45), die zur Rotation innerhalb der Tiefkühlkammer (34) montiert wurden, erzeugt wird.

13. Das Verfahren gemäß einem der Ansprüche 9 bis 12, worin die Tiefkühlkammer (34) einen frei rotierenden Käfig (56, 156) umfasst, der die Funktion hat, die Grenzschicht in der Kühlmittellösung an der Wand (30) zu unterbrechen.

14. Ein Verfahren zur Steuerung einer Vorrichtung für die Herstellung von Breieis, das als Kühlmittel verwendet wird, wobei das Gerät Folgendes umfasst:
eine Tiefkühlkammer (34) zur Aufnahme einer Kühlmittellösung, wobei die Tiefkühlkammer (34) zum Teil durch eine im Allgemeinen gekrümmte, umlaufende Innenwand (30) definiert wird,
die umlaufende Wand (30), welche eine Einrichtung (22) zur Erzeugung eines Wärmeaustausches durch die Wand (30) beinhaltet, sodass während des Betriebes Flüssigkeit aus der Kühlmittellösung heraus friert, um gefrorene Partikel an der Wand zu bilden,
**gekennzeichnet durch** eine Einrichtung (45, 144) zur Bildung eines Wirbels innerhalb der Flüssigkeit während des Betriebes, wobei der Wirbel imstande ist, die gefrorenen Partikel von der Wand (30) abzuschneiden und die Partikel in der Kühlmittellösung mitzunehmen, wodurch während des Betriebes ein Breieis in der Lösung erzeugt wird, das einen für die Anwendung als Kühlmittel geeigneten Eisanteil aufweist,
wobei die Tiefkühlkammer (34) ein frei rotierendes Käfig (56, 156) beinhaltet,
und wobei das Verfahren das Rotieren der Einrichtung (45, 144) zum Auslösen des Wirbels in einer vorher festgelegten Geschwindigkeit umfasst,
das Überwachen der Geschwindigkeit des frei rotierenden Käfigs (56, 156),
den Betrieb der Einrichtung (22) zur Erzeugung eines Wärmeaustausches, wenn die relative Geschwindigkeit der Rotation zwischen der Einrichtung (45, 144) zur Auslösung des Wirbels und dem frei rotierenden Käfig (56, 156) unter einem vorher festgelegten Wert liegt.

15. Ein System zum Abkühlen von Getränken, das die Vorrichtung aus einem der Ansprüche 1 bis 8 umfasst und überdies Folgendes beinhaltet:
eine Getränkeleitung zum Transport eines Produkts vom Großbehälter zu einer Abgabestelle,
eine Kühlmittelleitung zur Führung von Kühlmittel von der Vorrichtung entlang eines Weges, um die Getränkeleitung zu kühlen,
eine Rückholleitung, um Kühlmittel von der Kühlmittelleitung zur Vorrichtung zurückzuschicken.

## Revendications

1. Dispositif de production d'un coulis de glace pour une utilisation en tant que réfrigérant, comprenant :
une chambre de congélation (34) pour recevoir une solution réfrigérante, la chambre (34) étant définie en partie par une paroi périphérique interne généralement courbe (30),
la paroi périphérique (30) comprenant des moyens (22) pour la génération d'échange de chaleur à travers la paroi (30) de telle sorte qu'à l'usage le liquide de la solution réfrigérante se fige pour former des particules congelées sur la paroi (30)
**caractérisé par**
des moyens (45, 144) pour induire dans le fluide, pendant l'utilisation, un dispositif de tourbillonnement pour cisailler les particules congelées de la paroi (30) et entraîner les particules dans la solution réfrigérante, créant ainsi, pendant l'utilisation, un coulis de glace présentant une fraction de glace de telle sorte que le coulis de glace soit utilisable comme réfrigérant.

2. Dispositif selon la revendication 1, dans lequel le dispositif comprend un réservoir de stockage (4) pour recevoir, pendant l'utilisation, le coulis de glace provenant de la chambre de congélation (34) et le réservoir (4) comprend de préférence un brasseur (23) pour mélanger le réfrigérant.

3. Dispositif selon l'une quelconque des revendications 1 à 3, dans lequel, en utilisation, le tourbillon est généré par la rotation d'une roue (144) ou une vis sans fin (45) monté de façon à tourner à l'intérieur de la chambre de congélation (34).

4. Dispositif selon l'une quelconque des revendications 1 à 3, dans lequel la chambre de congélation (34) comprend une cage en rotation libre (56, 156) agissant en cours d'utilisation pour perturber la couche limite entre la paroi (30) et la solution réfrigérante de manière à maximiser le cisaillement des particules congelées.

5. Dispositif selon l'une quelconque des revendications précédentes, dans lequel le dispositif comprend une pompe (9A, 9B) pour le pompage du coulis de glace à partir du réservoir vers un emplacement de refroidissement.

6. Dispositif selon la revendication 4, comprenant un capteur pour surveiller la vitesse de rotation de la cage en rotation libre (56,156).

7. Dispositif selon la revendication 6, le dispositif comprenant un contrôleur pour actionner les moyens (22) afin de produire un échange de chaleur lorsque la vitesse de rotation relative entre les moyens (45,144) pour induire le tourbillon et la cage à rotation libre (56,156) est inférieure à une valeur prédéterminée.

8. Dispositif selon l'une quelconque des revendications précédentes, dans lequel la machine comprend un capteur de faction de la glace.

9. Procédé de production d'un coulis de glace pour une utilisation en tant que réfrigérant, comprenant les étapes consistant à :
introduire une solution réfrigérante dans une chambre de congélation (34) définie en partie par une paroi périphérique interne généralement courbe (30) ;
refroidir la solution réfrigérante au moyen d'échange de chaleur à travers ladite paroi (30) de telle sorte que le liquide de la solution gèle pour former des particules congelées sur la paroi (30) ;
**caractérisé par**
la génération au sein de la solution réfrigérante d'un tourbillon permettant de cisailler les particules congelées de la paroi (30) et entraîner les particules dans la solution réfrigérante créant ainsi un coulis de glace dans la solution, le coulis de glace présentant une fraction de glace de telle sorte que le coulis de glace puisse être utilisé comme réfrigérant.

10. Procédé selon la revendication 9, comprenant l'étape consistant à commander le débit d'échange de chaleur à travers la paroi (30) de manière à obtenir une fraction prédéterminée de la glace dans le coulis de glace, contrôlant, par exemple, le débit d'échange de chaleur à l'aide d'une commande marche/arrêt.

11. Procédé selon la revendication 10, comprenant l'étape supplémentaire consistant à générer un volume de coulis de glace provenant de la chambre de congélation (34) dans un réservoir de stockage (4) avant de pomper le réfrigérant à partir du réservoir (4) vers un emplacement de refroidissement et/ou
l'étape consistant à faire recirculer la solution réfrigérante entre le réservoir (4) et la chambre de congélation (34).

12. Procédé selon l'une quelconque des revendications 9 à 11, dans lequel le tourbillon est généré par la rotation d'une roue (144) ou de vis sans fin (45) monté en vue d'une rotation à l'intérieur de la chambre de congélation (34).

13. Procédé selon l'une quelconque des revendications 9 à 12, dans lequel la chambre de congélation (34) comprend une cage à rotation libre (56, 156) qui agit de manière à perturber la couche limite dans la solution réfrigérante sur la paroi (30).

14. Procédé de commande d'un dispositif de production d'un coulis de glace pour une utilisation en tant que réfrigérant, le dispositif comprenant :
une chambre de congélation (34) destinée à recevoir une solution réfrigérante, la chambre de congélation (34) définie en partie par une paroi périphérique interne généralement courbe (30),
la paroi périphérique (30) comprenant des moyens (22) pour générer un échange de chaleur à travers la paroi (30) de telle sorte qu'en cours d'utilisation le liquide de la solution réfrigérante se fige pour former des particules congelées sur la paroi,
**caractérisé par**
des moyens (45, 144) pour, en cours d'utilisation, induire dans le fluide un tourbillonnement permettant de cisailler les particules congelées de la paroi (30) et entraîner les particules dans la solution réfrigérante en créant ainsi, en cours d'utilisation, un coulis de glace dans la solution ayant une fraction de glace prédéterminé permettant une utilisation en tant que réfrigérant,
la chambre de congélation (34) comprenant une cage à rotation libre (56, 156),
le procédé comprenant les étapes consistant à faire tourner les moyens (45, 144) pour induire le tourbillon à une vitesse prédéterminée,
le contrôle de la vitesse de la cage à rotation libre (56,156)
le fonctionnement des moyens (22) pour produire un échange de chaleur lorsque la vitesse de rotation relative entre les moyens (45, 144) pour induire le tourbillon et la cage à rotation libre (56, 156) est inférieure à une valeur prédéterminée.

15. Système de refroidissement de boissons, y compris le dispositif de l'une quelconque des revendications 1 à 8, et comprenant en outre,
une ligne de boissons pour livrer le produit à partir d'un stockage en vrac vers un lieu de distribution,
une ligne de liquide de refroidissement pour transporter le réfrigérant du dispositif le long d'un trajet de façon à refroidir la ligne de boisson,
une ligne de retour pour renvoyer le liquide de refroidissement de la ligne de liquide de refroidissement vers le dispositif.
